# EUROPÄISCHE PATENTSCHRIFT

(11) **EP 0 416 348 B1**
(45) Veröffentlichungstag und Bekanntmachung des Hinweises auf die Patenterteilung: **20.10.1993**
(21) Anmeldenummer: 90115771.9
(22) Anmeldetag: 17.08.1990
(51) Int. Cl.: B65G 17/20

(54) **Förderanlage**
Conveyor
Transporteur

(30) Priorität: 02.09.1989 DE 3929158
(43) Veröffentlichungstag der Anmeldung: 13.03.1991
(73) Patentinhaber: DÜRKOPP ADLER AKTIENGESELLSCHAFT, D-33719 Bielefeld (DE)
(72) Erfinder: Grube, Erwin, D-4800 Bielefeld 18 (DE); Kuhlmann, Walter, D-4937 Lage (DE); Elges, Friedhelm, D-4800 Bielefeld 18 (DE)
(74) Vertreter: Rehmann, Klaus-Thorsten, Dipl.-Ing.

(56) Entgegenhaltungen:
- EP-A- 0 312 721
- DE-B- 1 229 452
- GB-A- 1 237 552

## Beschreibung

Die Erfindung betrifft eine Förderanlage zum Transportieren von auf Bügeln hängenden Gütern nach dem Oberbegriff des Anspruchs 1.

Eine solche allgemein als Hängeförderer bezeichnete Förderanlage weist in der Regel einen Hauptförderstrang und mehrere Nebenstränge auf. Die Nebenstränge können dazu dienen, einzelnes Fördergut, das zuvor aus dem Hauptförderstrang ausgeschleust wurde, so lange aufzustauen, bis es zur weiteren Be- oder Verarbeitung benötigt wird und dazu vom Nebenstrang abgeladen, umgeschichtet oder einfach weiter transportiert und in den Hauptstrang wieder eingeschleust wird. Ein solcher Nebenstrang wird im üblichen Sprachgebrauch als Stauförderer bezeichnet.

Dazu ist es seit langem bekannt, diesen Nebenstrang als Gefällestrecke auszubilden, so daß die auf den Bügeln hängenden Güter aufgrund ihres Eigengewichts auf einer Gleitschiene abgleiten können.

Nachteilig eines so ausgebildeten Stauförderers ist zum einen, daß dessen realisierbare Länge stark vom notwendigen Gefälle abhängig ist, weil dies durch die vorhandene Raumhöhe innerhalb derer der Förderer aufgestellt ist, begrenzt wird. Zum anderen hat die Steigung des Gefälles, insbesondere bei unterschiedlichem Gewicht des Transportgutes, einen hohen Einfluß auf die Funktionsfähigkeit. Da sowohl leichte Güter (z.B. Blusen) als auch schwere Güter (z.B. Mäntel) über dieselbe Strecke transportiert werden, ist bei der Festlegung des Gefälles immer ein Kompromiß zu finden, der auch ein sicheres Abgleiten des leichtesten zu fördernden Gutes gewährleistet.
Bei schweren Gütern führt diese Einstellung dann zwangsläufig zu einem erheblichen Staudruck an der Aufstaustelle, wodurch die maximal ausführbare Staulänge weiter eingeschränkt werden muß.
Da zum Stauen nicht nur horizontaler, sondern auch vertikaler Raum erforderlich ist, ist das Raum-Nutzungsverhältnis bei Verwendung von Gefällestrecken schlecht.

Ebenso ist es bekannt, den Förderstrang als horizontal verlaufende, sich drehende Spindel auszubilden, auf die die Kleiderbügel mit den Haken aufgegeben werden. Durch Anordnen einer Aufstau-Einrichtung, die in die Transportrichtung der Förderschnecke hineinragt und gegen die die Bügelhaken anlaufen, wird dann das Fördergut aufgestaut (DE-U1-88 08 642).

Durch die hohe Gewichtsbelastung im Staubereich und die durch die aufgestauten, bei drehender Spindel auf den Gewindegängen überspringenden Bügel entstehenden Reibungskräfte erwärmt sich die Spindel und dehnt sich in Horizontalrichtung aus, was zu Problemen an der Schnittstelle zu dem sich an den Stauförderer anschließenden weiteren Förderstrang führt.

Da außerdem eine Lagerung der Spindel nur an den beiden Enden möglich ist, wird die maximal mögliche Staulänge durch die Festigkeit des Spindelwerkstoffs bzw. das Gewicht des zu stauenden Gutes begrenzt. Zur Überwindung von Höhendifferenzen innerhalb einer Förderanlage - beispielsweise von einem Stockwerk ins andere oder von einem im Nebenstrang integrierten in normaler Arbeitshöhe befindlichen Bearbeitungsplatz (Nähmaschine) in den Hauptstrang - werden sogenannte Schrägförderer eingesetzt.
Diese können ebenfalls von einer angetriebenen Spindel gebildet werden (DE-A-30 47 282). Wobei, um einen Vortrieb der Bügel zu gewährleisten, die Gewindespirale tiefer ausgeschnitten werden muß.
Zu den bereits erwähnten Nachteilen der Spindel kommt verkomplizierend hinzu, daß der Antrieb, da er außerhalb des Transportbereichs angeordnet sein muß, kardanisch mit der Spindel gekoppelt ist, was technisch recht aufwendig ist.
Ferner können die Bügelhaken an den Auf- und Abgabestellen einander überlaufen, so daß sich das Transportgut verkeilt. Es ist auch bekannt, einen Schrägförderer mit einem Mitnehmerhaken aufweisenden umlaufenden Gurt zu versehen (DE-C-35 31 550). Wenn ein solcher Schrägförderer für den direkten Transport von Kleiderbügeln verwendet werden soll, ist die Aufbauhöhe des Förderers begrenzt durch den Krümmungsdurchmesser des Hakens. Inbesondere bei hohem Gewicht des Transportguts sind dann Funktionseinschränkungen nicht ausgeschlossen.

Die DE-AS 11 83 021 und die DE-OS 21 21 087 offenbaren einen Förderer mit einem umlaufenden Gurt, dessen unteres Trum geschützt in einem Rohr verläuft. Das zu fördernde Gut wird entweder direkt auf das obere Trum aufgelegt und geführt oder über einen Bügelhaken auf dem Gurt eingehängt.

Aus der DE-OS 33 36 190 ist eine Hängefördereinrichtung bekannt, mit der das Fördergut mittels winkelförmig gebogener Träger auf einem nahezu geschlossenen Tragband eingehängt und transportiert werden kann. Dieses Tragband wird durch einzelne mit geringem Abstand aneinanderstoßende im Querschnitt wellenförmig ausgestaltete Tragplatten gebildet.

Die DE-U 89 05 996 offenbart einen Höhenförderer für auf Kleiderbügel hängende Kleidungsstücke, bei dem ein umlaufender Gurt schuppenartige Vorsprünge aufweist. Mit diesen Schuppen werden die Bügel, die auf einer dicht unterhalb des Gurts angeordneten Stange gleitend geführt sind, nach oben geschoben.

Außerdem sind Kettenförderer bekannt, bei denen die Kette, in die die Kleiderbügelhaken eingehängt werden können, in Führungsleisten, die eine hohe Gleitfähigkeit gewährleisten, geführt ist. Die Führungsleisten können in einer im Querschnitt rechteckigen, eine U-Form aufweisenden Schiene untergebracht sein (DE-OS 19 50 151).

Die zur Gattungsbildung herangezogene DE-OS 18 02 073 offenbart unter anderem einen Horizontal- oder Schrägförderer für Kleiderbügel, bei dem als Zugmittel eine in einem Rechteckprofil gleitend geführte Kreuzkette vorgesehen ist. Das gleichzeitig als Tragschiene dienende Rechteckprofil ist nach oben hin geschlitzt ausgebildet, so daß die Bügelhaken durch diesen Schlitz in jeweils ein horizontal verlaufendes Kettenglied eingehängt werden können. Der eingehängte Bügelhaken liegt dabei entweder mit seinem Kopfbereich auf der Führungsschiene auf oder stößt mit seiner Spitze auf den Innenboden des Rechteckprofils. In beiden Fällen werden die Bügel durch die Kette angetrieben gleitend geschoben. Hieraus resultiert eine hohe Geräuschemission und Verschleiß des Schienenprofils. Wenn die Bügelspitze auf dem Innenboden des Profils aufliegt, dreht sich der Kleiderbügel während des Transports dann soweit, bis der Bügelhaken an der Trägerschiene zur Anlage gelangt. Da die Bügelhaken mit den Kettengliedern im Formschluß sind, kann ein solcher Förderer nicht als Stauförderer eingesetzt werden. Im Rahmen der geforderten Automatisierungsmöglichkeit muß eine selbsttätige Übergabe bzw. Abnahme auf bzw. von der Förderkette möglich sein. Da hierbei die Haken verkanten und verklemmen können, ist der funktionssichere Betrieb nicht gewährleistet.

Von diesem Stand der Technik ausgehend, liegt der Erfindung die Aufgabe zugrunde, einen Hängeförderer so fortzubilden, daß er sowohl als Stau- als auch als Schrägförderer einsetzbar ist, der einen geräuscharmen, möglichst verschleißfreien Betrieb ermöglicht und der eine funktionssichere automatische Auf- und Abgabe des auf Bügeln hängenden Transportguts gewährleistet.

Die Lösung der Aufgabe erfolgt durch die Merkmale des Anspruchs 1.
Vorteilhafte Ausgestaltungen der Erfindung sind den Unteransprüchen entnehmbar.

Die Erfindung zeichnet sich dadurch aus, daß die Bügelhaken im Gegensatz zum Stand der Technik nicht in ihrer Schwerpunktlage im Kopfbereich des Bügels transportiert werden, sondern an der Bügelspitze, so daß die Auf- und Abgabebereiche parallel zur eigentlichen Transporteinheit anzuordnen sind und dadurch die Bügelhaken in der Schwerpunktslage im Kopfbereich ein- und ausgeschleust werden können.

Da das als Zahnriemen ausgebildete Zugmittel an jeder Stelle abgestützt werden kann, ohne den Transport der Bügel einzuschränken, ist die Förderlänge beliebig ausführbar.
Weil die Kontaktfläche zwischen Bügelspitze und Zugmittel nur sehr gering ist, entstehen bei einem nach Anspruch 6 ausgebildeten Stauförderer an der Staustelle darüberhinaus keine übermäßigen, durch Gleitreibung hervorgerufenen Kräfte.
Dadurch, daß an den Anschlußstellen des Stauförderers die Ein- und Ausgabe geradlinig (in der Schwerpunktlage im Kopfbereich des Bügels) erfolgen kann, entstehen keine ansonsten durch Wechsel der Transportrichtung hervorgerufene Einflußfaktoren. Außerdem bleiben durch Temperaturschwankungen hervorgerufene Längenänderungen des Förderers oder seiner Auf- und Abgabeeinrichtungen ohne Einfluß auf die Funktionsfähigkeit.

In Verbindung mit der in der DE-PS 25 37 442 offenbarte Beladeeinrichtung für sogenannte Trolleys kann mit dem erfindungsgemäßen Förderer die Beladung automatisch erfolgen, weil der Trolley parallel zum Stauförderer bzw. einer nachgeschalteten Vereinzelungseinrichtung gefahren werden kann. Die Übergabe ist dann durch Ausbildung einer kurzen Gefällestrecke möglich. Selbstverständlich kann nach der Erfindung auch ein horizontal geführter Förderer - als sogenannter Speicherförderer - von beliebiger Länge ausgebildet sein. Sofern ein nach Anspruch 3 ausgeführter Förderer einem Stauförderer nach Anspruch 4 nachgeordnet ist und dessen Zugmittel schneller umläuft, wird das aufgestaute Gut während des Transports vereinzelt.

Mit Hilfe einer Zeichnung soll die Erfindung anhand zweier Ausführungsbeispiele, einem Stauförderer und einem Schrägförderer, nachfolgend näher erläutert werden.
Es zeigt:
- Fig. 1: einen Stauförderer mit Auf- und Abgabestelle in Seitenansicht,
- Fig. 2: den Längsschnitt des Stauförderers entlang der Linie B-B nach Fig. 1,
- Fig. 3: den Querschnitt des Stauförderers entlang der Linie A-A nach Fig. 1,
- Fig. 4: die Einzelheit "X" nach Fig. 1.
- Fig. 5: den Querschnitt des Stauförderers entlang der Linie C-C gemäß Fig. 2.
- Fig. 6: die schematische Teildarstellung einer Förderanlage mit darin angeordnetem Schräg- und Stauförderer,
- Fig. 7: einen Schrägförderer mit Auf- und Abgabestelle in Seitenansicht,
- Fig. 8: den Längsschnitt des Schrägförderers entlang der Linie B'-B' nach Fig. 7,
- Fig. 9: den Querschnitt des Schrägförderers entlang der Linie A'- A' nach Fig. 7,
- Fig. 10: die Einzelheit "Y" nach Fig. 7.

### Stauförderer

Der Stauförderer 33 ist in den Nebenstrang eines Hängeförderers integriert und besteht im wesentlichen aus:
Dem über Streben 11 an der Hallendecke befestigbaren Grundkörper 5, dem als Zahnriemen ausgebildeten, umlaufend angetriebenen Zugmittel 2, den im Grundkörper 5 gelagerten Ritzeln 6,7, dem Antriebsmotor 8 sowie der Aufgabeschiene 9 und der Abgabeschiene 10.

Der Antriebsmotor 8 ist in Höhe der Abgabeschiene 10 seitlich am Grundkörper 5 angeflanscht und treibt über die Antriebswelle 12 das Antriebsritzel 6 an. Ober das Antriebsritzel 6 und das in Höhe der Aufgabeschiene 9 angeordnete Umlenkritzel 7 ist der Zahnriemen 2 geführt. Das Antriebsritzel 6 ist über die Motorwelle 12 im Motor 8, der über das Lagerungsteil 21 am Grundkörper 5 angeflanscht ist, gelagert. Das Umlenkritzel 7 ist, aber hier nicht näher dargestellt, über die Welle 17 im am Grundkörper 5 befestigten Flanschteil 16 gelagert.

Der Grundkörper 5 weist in vorteilhafter Weise den in Fig. 3 gezeigten Querschnitt auf, so daß der Zahnriemen 2 durch die Schultern 13, 14 führbar ist. Der sich durch die Schultern 13,14 im Grundkörper 5 ausbildende Kanal ist etwas breiter als der Zahnriemen 2, wodurch ein Abrutschen des Zahnriemens 2 vom Grundkörper 5 wirkungsvoll verhindert wird, gleichzeitig aber Verluste durch Reibung des Zahnriemens 2 an den Schultern 13 bzw. 14 vermieden werden.
Mit seinen Zahnflanken 2b liegt der obere Trum des umlaufenden Zahnriemens 2 auf dem Grundkörper 5 auf, so daß über die vollständige Länge des Stauförderers eine Unterstützung des Zahnriemens 2 und somit eine exakte Einhaltung der Transportrichtung T möglich ist. In Transportrichtung T vor der Abgabeschiene 10 ist seitlich vom Stauförderer 33 ein in den Transportbereich hinein schwenkbarer Anschlag 18 angeordnet, gegen den an der mit 18a bezeichneten Stelle die Bügelhaken 1 anlaufen können und dadurch das Fördergut aufgestaut wird. Dabei ist natürlich selbstverständlich, daß nur der erste Bügel gegen den Anschlag 18 anläuft und jeder nachfolgende Bügelhaken 1 sich an dem jeweils vor ihm liegenden abstützt.

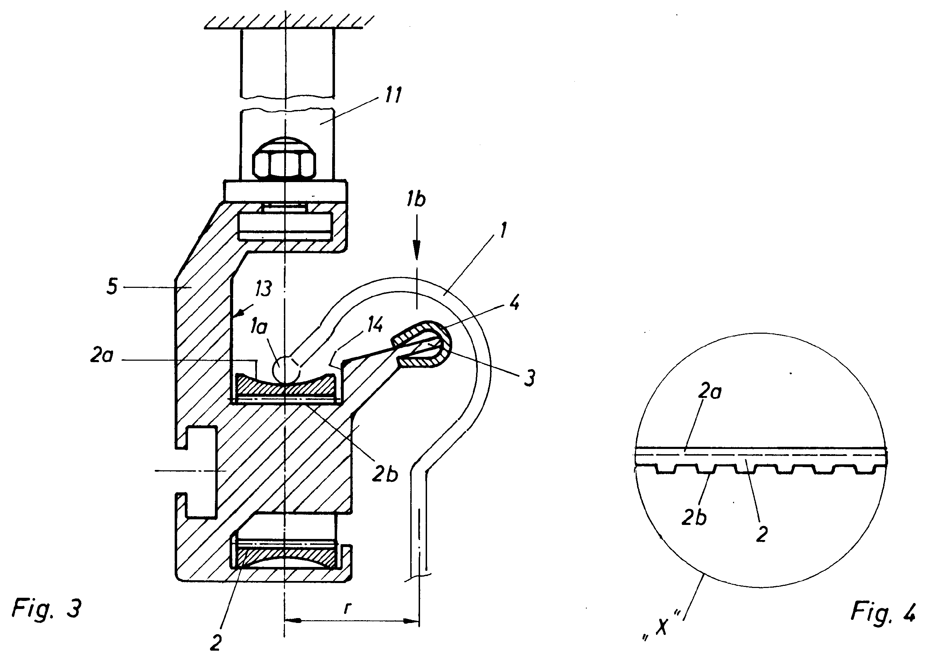

Fig. 2 ist entnehmbar, daß die Aufgabeschiene 9 seitlich versetzt zum Grundkörper 5 angeordnet ist. Die Aufgabeschiene 9 führt zum hier nicht dargestellten Hauptstrang des Förderers. Der seitliche Versatz der Aufgabeschiene 9 zum Grundkörper 5 ist so gewählt, daß der Abstand a von der Mitte des Zahnriemens 2 zur Mitte der Aufgabeschiene 9 dem Abstand r von Bügelspitze 1a zur Schwerpunktlinie 1b des Bügelhakens 1 entspricht. Über das Winkelblech 19 ist die Aufgabeschiene 9 am Flanschteil 16 bzw. am Grundkörper 5 befestigt.

Entlang der mit Gefälle vom Hauptstrang zum Stauförderer 33 angeordneten Aufgabeschiene 9 gleiten die Kleiderbügel mit den Bügelhaken 1 im Bereich ihrer Schwerpunktlage 1b geführt unter Einwirkung der Schwerkraft vom Hauptstrang in den Stauförderer 33. Die Aufgabeschiene 9 endet (in Transportrichtung T betrachtet) kurz hinter dem Zentrum des Umlenkritzels 7, so daß abrutschende Bügel auf den Zahnriemen 2 fallen. Durch den hohlkehlenförmigen Querschnitt 2a des Zahnriemens 2, der so angeordnet ist, daß seine Zähne 2b mit den Ritzeln 6,7 in Eingriff stehen, wird die Bügelhakenspitze 1a durch die hohlkehlenförmige Ausbildung immer in der Mitte des Zahnriemens 2 geführt (Fig. 3).

Durch den über das Antriebsritzel 6 angetriebenen Zahnriemen 2 werden die Bügel an der Hakenspitze 1a in Transportrichtung T transportiert, bis der erste Bügel mit dem Haken 1 gegen den Anschlag 18,18a läuft, dadurch am Weitertransport gehindert wird und sich dahinter die weiteren Bügelhaken 1 aufstauen.

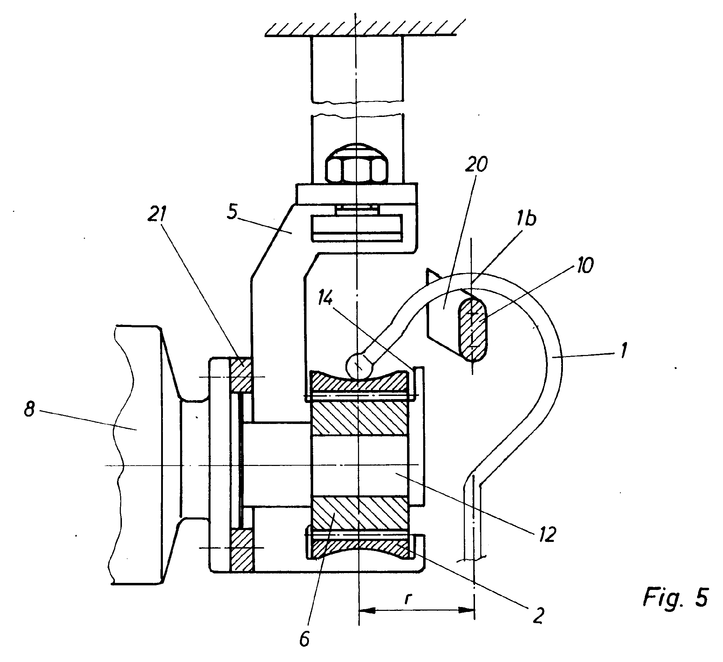

Wenn die gewünschte Anzahl Kleiderbügel aufgestaut ist, wird der Antriebsmotor 8 abgeschaltet.
Nach erneutem Anlauf des Antriebsmotors 8 und Wegschwenken des Anschlags 18 erfolgt der Weitertransport der Bügel. An der Abgabeschiene 10, die seitlich und oberhalb des Zahnriemens 2 entgegen der Transportrichtung T in den Stauförderer 33 hineinragt, werden die Bügel entlanggeführt und zwar derart, daß der Schwerpunktsbereich 1b des Hakens 1 über der Abgabeschiene 10 zum Liegen kommt (Fig. 5). Über das einerseits an der Abgabeschiene 10 und andererseits am Flanschstück 21 befestigte Winkelstück 15 ist die Abgabeschiene 10 fest mit dem Grundkörper 5 verbunden.

Für den seitlichen Versatz b der Abgabeschiene 10 gilt ebenso wie für den seitlichen Versatz a der Aufgabeschiene 9, daß dieser so groß ist, daß der Abstand von der Mitte des Zahnriemens 2 zur Mitte der Abgabeschiene 10 dem Abstand r von der Bügelspitze 1a zur Schwerpunktlinie 1b des Bügelhakens 1 entspricht.

Damit eine sichere Übergabe der Bügel an die Abgabeschiene 10 möglich ist, ist das über den Zahnriemen 2 hinausragende Ende 20 der Abgabeschiene 10 seitlich in Richtung des Grundkörpers 5 abgewinkelt. Somit wird ein Bügelhaken 1 auch dann übergeben, wenn er auf der der Schulter 13 am nächsten befindlichen Seite des Zahnriemens 2 transportiert werden sollte. In Höhe des Zentrums des Antriebsritzels 6 knickt die Abgabeschiene 10 im weiteren Verlauf der Transportrichtung T nach unten ab, so daß die transportierten Bügelhaken 1, nachdem sie außer Eingriff mit dem Zahnriemen 2 kommen, auf die schräge Abgabeschiene 10 fallen und durch ihr Eigengewicht hinabrutschen.

Die senkrecht nach oben geführte Schulter 14 am Grundkörper 5 geht in einen nach außen (Transport-Bereich) ragenden Ansatz über, der als Führungsleiste 3 dient. Diese Führungsleiste 3 ragt so weit nach außen, daß sie die Schwerpunktlinie 1b des Bügelhakens 1 überragt. Sie befindet sich folglich zwischen dem Zahnriemen 2 und dem der Bügelspitze 1a diametralen Bereich des Bügelhakens 1 (vergleiche Fig. 3).

Am äußeren Ende der Führungsleiste 3 ist eine Gleitleiste 4 aus Kunststoff aufgebracht. Fig. 3 macht deutlich, daß die Führungsleiste 3, bzw. die Gleitleiste 4 sowohl ein Umschwenken der Bügel während des Transports oder der Lagerung als auch einen Transport mit zu dicht an der Schulter 13 des Grundkörpers 5 zur Aufnahme gelangten Bügelspitze 1a verhindert. Die in vertikaler Richtung über den Zahnriemen 2 hinausragende Schulter 14 am Grundkörper 5 verhindert ein Abrutschen des Bügelhakens 1 in seitlicher Richtung.

### Schrägförderer

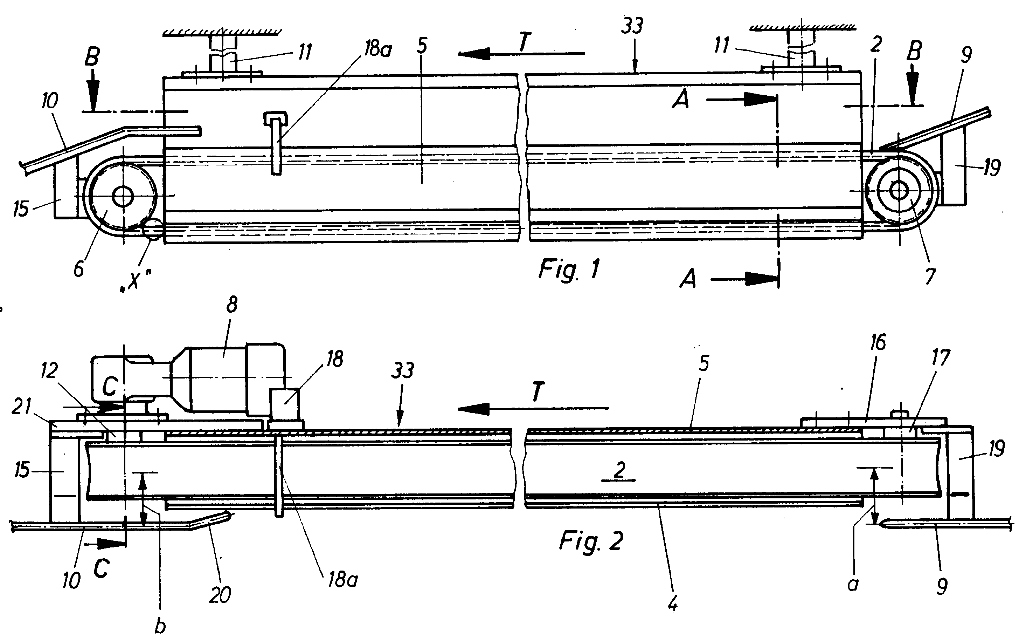

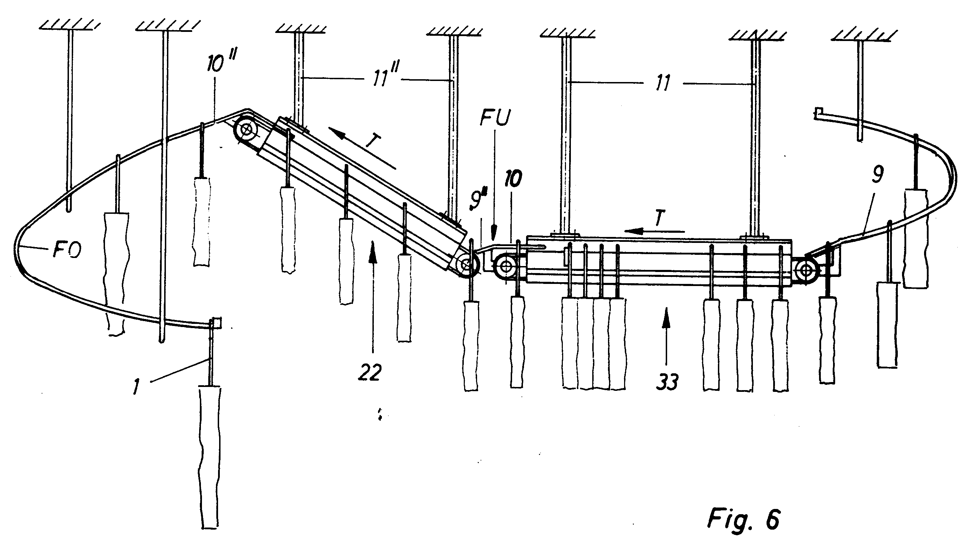

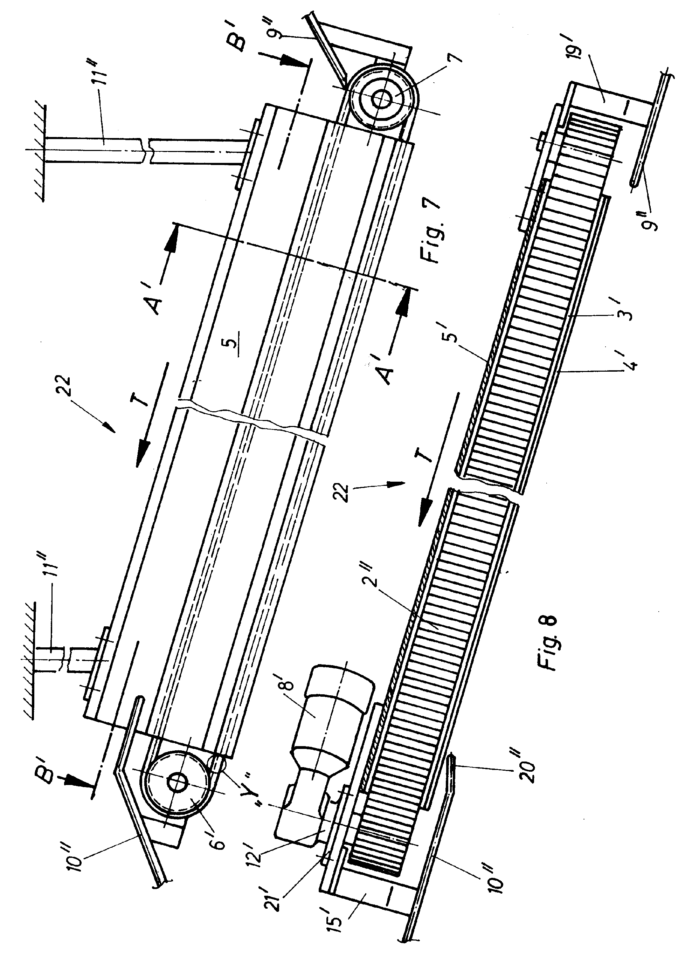

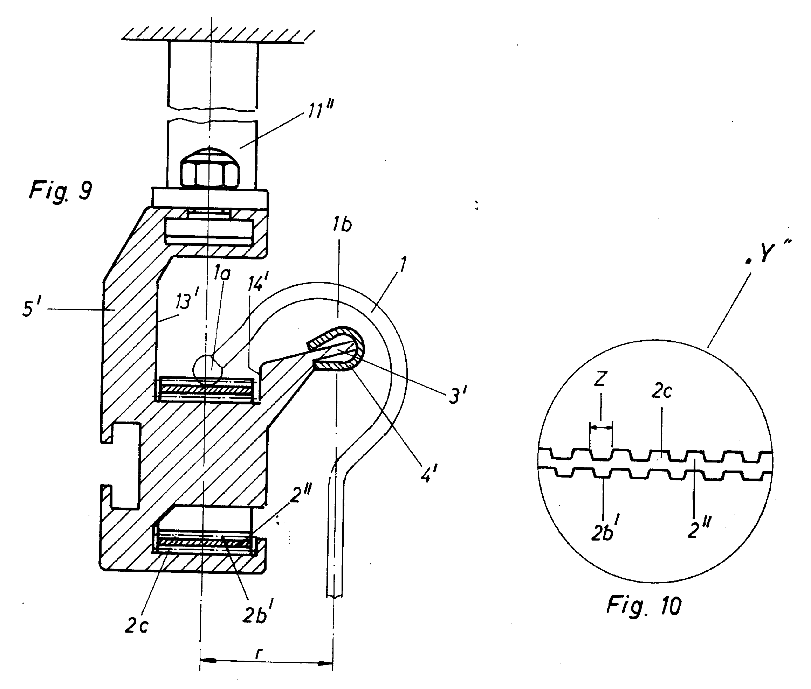

Zur Überwindung von Höhenunterschieden innerhalb einer Förderstrecke, insbesondere zum Transportieren von einem Förderstrang FU niedrigen Höhenniveaus in einen Förderstrang FO mit höherem Niveau kann die zuvor beschriebene Einrichtung mit geringen Modifikationen ebenfalls Verwendung finden.
Der besseren Übersichtlichkeit willen sind die Bauteile des nachfolgend zu erläuternden Schrägförderers 22 nach Fig. 6 bis 10, die mit denen des zuvor beschriebenen Stauförderers 33 nach Fig. 1 bis 5 identisch sind, mit denselben Positionsziffern und einem hochgestellten Strich ' versehen. Bauteile mit der gleichen Funktion aber einer anderen Ausbildungsform sind mit derselben Ziffer und zwei hochgestellten Strichen " bezeichnet. Insoweit gilt das bereits Beschriebene auch nachfolgend.

Der Grundkörper 5' ist mit einem beidseitig gezahnten Zahnriemen 2'' der in bereits beschriebener Weise durch die Ritzel 6', 7' umlaufend angetrieben ist. Der Abstand Z zwischen der oberen Zahnung 2c beträgt etwas mehr als der Durchmesser der Bügelhakenspitze 1a der zu transportierenden Bügel. Über die Streben 11" ist der Schrägförderer 22 so unter der Hallendecke befestigt, daß die Höhendifferenz zwischen den beiden Fördersträngen FU, FO überbrückt wird.

Figur 6 zeigt rein schematisch die Anordnung des Schrägförderers 22 und des Stauförderers 33 innerhalb einer Förderanlage. Die Abgabeschiene 10 des Stauförderers 33 geht über in die Aufgabeschiene 9'' des Schrägförderers 22. Wie bereits erwähnt, rutschen die Bügel auf den Bügelhaken 1 im Schwerpunktsbereich 1b entlang der Schienen 10, 9'' und fallen am Ende der Aufgabeschiene 9'' auf das obere Trum des Zahnriemens 2'' in den Schrägförderer 22. Auch hier bewirkt der seitliche Versatz der Aufgabeschiene 9'' zum Grundkörper 5', daß die Bügelhaken 1 mit ihrer Spitze 1a innerhalb des Mittenbereiches des Zahnriemens 2'' landen. Durch die Einwirkung der Schwerkraft rutscht die Bügelhakenspitze 1a zwischen zwei Zähne 2c und kommt gegen die entgegen die Transportrichtung T weisenden Zahnflanke zur Anlage und der Bügel wird nach oben gefördert. Am oberen Ende angelangt, wird der Bügelhaken 1 an die Abgabeschiene 20'', 10'' übergeben. Der Bügelhaken 1 rutscht innerhalb seines Schwerpunktbereichs 1b auf der Abgabeschiene 10'' in den oberen Förderstrang FO und wird von hier weitertransportiert.

Wenn der Zahnriemen 2'' des Schrägförderers 22 schneller umläuft als der Zahnriemen 2 des Stauförderers 33 werden die zuvor aufgestauten Bügel gleichzeitig vereinzelt. Durch die obere Verzahnung 2c wird außerdem ein definierter Abstand zwischen den einzelnen Bügelhaken 1 eingehalten.

## Patentansprüche

1. Förderanlage zum Transportieren von auf Bügeln hängenden Gütern, insbesondere Kleidungsstücken, wobei die Bügelhaken (1) der Bügel von einem in Transportrichtung in einem Grundkörper geführt umlaufenden Zugmittel (2) im Bereich des freien Endes eines Bügelhakens erfaßt werden,
dadurch gekennzeichnet,
daß sich beim Transport das freie Ende des Bügelhaken s (1) auf dem Zugmittel (2) abstützt und außen am Grundkörper (5) eine Führungsleiste (3) vorgesehen ist, die in Richtung des der Bügelhakenspitze (1a) diametralen Bereichs des Bügelhakens (1) weist.

2. Förderanlage nach Anspruch 1,
dadurch gekennzeichnet, daß
die Führungsleiste (3) über den Schwerpunktbereich (1b) des Bügelhakens (1) hinausragt.

3. Förderanlage nach Anspruch 1 oder Anspruch 2,
dadurch gekennzeichnet, daß
die äußere Kante der Führungsleiste (3) mit einer Stoßleiste (4) versehen ist.

4. Förderanlage nach Anspruch 1,
dadurch gekennzeichnet, daß
das Zugmittel (2) ein Zahnriemen ist.

5. Förderanlage nach Anspruch 4,
dadurch gekennzeichnet, daß
der Zahnriemen (2) beidseitig gezahnt ist.

6. Förderanlage nach Anspruch 4,
dadurch gekennzeichnet, daß
der Zahnriemen (2) ein im Querschnitt hohlkehlenförmiges Profil aufweist und so angeordnet ist, daß die Hohlkehle die zum Transport der Bügelhaken (1) dienende Oberfläche bildet.

## Claims

1. A conveyor system for transporting goods, more especially articles of clothing, hanging on hangers, in which the hooks (1) of the hangers are gripped near the free ends of the hooks by a rotating traction means (2) guided in the transport direction in a base member, characterised in that during transport, the projecting end of the hanger hook (1) bears on the traction means (2) and also a guide ledge (3) is provided on the base member (5) and extends in the direction from the hanger hook tip (1a) in the diametral region of the hanger hook (1).

2. A conveyor system according to claim 1, characterised in that the guide ledge (3) projects beyond the centre of gravity region (1b) of the hanger hook (1).

3. A conveyor system according to claim 1 or claim 2, characterised in that the outer edge of the guide ledge (3) has a buffer ledge (4).

4. A conveyor system according to claim 1, characterised in that the traction means (2) is a toothed belt.

5. A conveyor system according to claim 4, characterised in that the toothed belt (2) is toothed on both sides.

6. A conveyor system according to claim 4, characterised in that the toothed belt (2) has a fillet-shaped cross-section and is disposed so that the fillet forms the surface for transporting the hanger hooks (1).

## Revendications

1. Transporteur pour transporter des marchandises accrochées à des cintres, notamment des vêtements, les crochets (1) des cintres étant saisis, dans la région de l'extrémité libre des crochets, par un moyen d'entraînement (2) circulant dans la direction de transport en étant guidé dans un corps de base,
caractérisé en ce que l'extrémité libre du crochet de cintre (1) s'appuie sur le moyen d'entraînement (2) lors du transport, et une barrette de guidage (3) est prévue extérieurement sur le corps de base (5) et s'étend en direction de la région du crochet de cintre (1) qui est diamétrale par rapport au sommet (1a) du crochet de cintre.

2. Transporteur selon la revendication 1, caractérisé en ce que la barrette de guidage (3) s'étend au-delà de la région (1b) du centre de gravité du crochet de cintre (1).

3. Transporteur selon la revendication 1 ou 2, caractérisé en ce que l'arête extérieure de la barrette de guidage (3) est munie d'une barrette de protection (4).

4. Transporteur selon la revendication 1, caractérisé en ce que le moyen d'entraînement (2) est une courroie crantée.

5. Transporteur selon la revendication 4, caractérisé en ce que la courroie crantée (2) est crantée des deux côtés.

6. Transporteur selon la revendication 4, caractérisé en ce que la courroie crantée (2) présente un profil à section concave et est disposée de telle sorte que la partie concave constitue la surface servant au transport des crochets de cintres (1).
